# EUROPEAN PATENT APPLICATION

(11) **EP 4 553 203 A1**
(43) Date of publication of application: **14.05.2025**
(21) Application number: 23208548.0
(22) Date of filing: 08.11.2023
(51) Int. Cl.: D01B 5/04, B25J 15/02

(54) **GRIPPER FOR HOLDING SEPARATED BUNDLE OF LONG FIBRES, SYSTEM AND METHOD FOR TRANSFERRING SEPARATED BUNDLE OF LONG FIBRES USING THE GRIPPER**

(71) Applicant: UAB Linolitas, 53280 Rinkunai Kaunas (LT)
(72) Inventor: Griskevicius, Mantas, Marijampole (LT); Douchy, Didier, Wevelgem (BE); Douchy, Frederic, Wevelgem (BE)
(74) Representative: Zaboliene, Reda

(57) **Abstract**

The invention is related to a gripper for holding a separated bundle of long fibres, a transferring system and a method, wherein the gripper for proper long fibres holding, the system comprising a gripper for transferring the separated bundle of long fibres and the method of using the said system of transferring the separated bundle of long fibres from a manual station or the collection place towards another long fibres bundle collection place such as a holder of a hackling machine or another place without messing up the fibres during the transportation. This invention is applicable in all bast fibres industry, particularly it is intended for long fibres (+ 20 cm) such as flax fibres, hemp fibres, sisal fibres, kenaf fibres, jute fibres, etc., as well in scutched form or hackled form. This gripper can be mounted on a robot or another tool, which serves as the transport mechanism between different locations.

## Description

### FIELD OF THE INVENTION

The present invention relates to the field of long fibre processing and more specifically to a method and a device for gripping, holding, and transferring. of a separated bundle of long fibres.

### BACKGROUND OF THE INVENTION

There have been known and used for a long time equipment for transferring long fibres like flax fibres from the holder to another machine like a spreader.

GB191220960 document describes the automatic transferring the hackled stricks of flax from the holders of a hackling- machine to the spread board or other machine, the grippers, which withdraw the stricks from the holders, comprise a pair of bars, one capable of movement towards the other to grip the strick, carried by radial arms which are swung about a common center, either to give the stricks to a pair of nippers, which deposit them on an apron for conveyance to the spread board, or to lay the stricks directly upon the teeth of a set of fallers, or to lay the stricks directly upon an apron.

GB300749 describes an arrangement for transferring automatically stricks of flax from the holders of a hackling- machine to another machine such as a spread board, a striker bar 15 is arranged to descend by its own weight and, after a short movement of the transferrer mechanism, to strike the tail end of the strick to disengage it completely from the holder 7 as it is being withdrawn by the gripper. The gripper is mounted on a bracket 1, 2, secured to frame 3 of the hackling-machine.

Common techniques and methods recently used for the transferring of flax from the holder to another machine as a spreader, have numerous disadvantages and requires certain conditions: currently, the operation of introducing the separated bundle of long fibres into the holders of the machine is manual; handling of long fibres requires care to avoid tangling and to maintain an even fibre distribution across the width of the bundle of long fibres; it is important to avoid pulling, dragging, or dropping of the fibres, as the losing of fibres during transportation is costly; The transferring of the bundle of long fibres require additional support.

The suggested invention is dedicated to overcome mentioned shortcomings and for the achievement of further additional advantages over prior art and by the possibility to apply the new technique and the method for the transferring of the bundle of fibre from one unit to another.

### SUMMARY OF THE INVENTION

The aim of the invention is a gripper for holding a separated bundle of long fibres in a proper way to create the possibility to automatize and to simplify the complicated parts of transferring a separated bundle of long fibres in a long fibres' treatment process. To achieve the goal, it was invented a gripper for a separated bundle of long fibres, the system comprising a gripper for transferring a separated bundle of long fibres and a method of using the said system, designed for transferring of a separated bundle of long fibres from a collecting place like an automatic feeding unit towards another collecting place such as a holder of a hackling machine or another place without messing up the fibres during the transportation.

The gripper comprises a bottom box, a top plate, and a motion unit with a connector between the top plate and the bottom plate with a means for producing a clamping force. The said top plate has an inner side and an outer side, two longitudinal side edges, a back edge and a front edge. In the inner side of the top plate at a distance from the back edge there is a fixed flexible flap through the width of the plate for forming an elastic compression on the bundle of long fibres in the gripper. The back edge of the top plate is raised into the inner side of the top plate.

The bottom box comprises of an elongated plate which has an inner and an outer side, two longitudinal side edges, a back edge in the back part of the bottom box and a front edge in the front part of the bottom box. The side edges of the plate of the bottom box are slightly raised on the inner side of the plate, forming the U-shaped bottom box with an extended lower part, in which the separated bundle of long fibres is placed along the bottom box between the side edges of the bottom box, so that the bundle is stable and cannot fall out on the sides of the bottom box.

The bottom box is pivotable around an axis configurated widthwise of the bottom box, enabling the bottom box to be opened and closed.

The rotation axis of the bottom box corresponds to the rotation axis of the gripper and is reinforced to allow rotation of the gripper with the clamped separated bundle of long fibres.

At a closed position of the gripper, the inner side of the top plate faces the inner side of the bottom box. The longitudinal side edges of the top plate fit in between the raised side edges of the bottom box. The raised back edge of the top plate is positioned at the rear part of the bottom box with the configuration of the flexible flap on the top plate and the bottom box together creates retention points for ensuring a tight but flexible hold on the longitudinal bundle of the long fibres.

The length of the bottom plate of the bottom box depends on the length of the fibres and is not greater than half of the length of the long fibres, the length of the top box is shorter than the bottom box plate. The width of the bottom box plate is such that the separated bundle of long fibres would fit in when placed in longitudinally and forms the uncompressed layer across plates width.

The separated bundle of long fibres transferring system comprises:
- the gripper as described above, for gripping of the separated bundle of long fibres;
- a support means for transferring the bundle of fibres to the gripper;
- a holding means for taking over the long free end of the transferred said long fibres.

Optionally, it can be introduced a clamping unit for compressing and holding the longer free end of the separated bundle of long fibres, used for stretching and homogenization of the long fibres.

The method for transferring of the separated bundle of long fibres is performed using the transferring system as described above, wherein the method comprises the following method steps:
(a) bringing the gripper to the collection point of the separated bundle of long fibres in an open position;
(b) introducing the separated bundle of long fibres into the gripper, where one end of the separated bundle of the long fibres is placed lengthways between the two raised side edges of the bottom box and the other free end of the separated bundle of long fibres coming out the back edge of the bottom plate (10) and laying on the support means;
(c) closing the whole gripper, when the top plate is inserting between the two raised edges of the bottom box, and the bundle of long fibres is completely gripped in the gripper with the compressed retention points;
(d) moving the closed gripper with the clamped bundle of long fibres to the holder;
(e) inserting the longer free end of the bundle of long fibres into the holder;
(f) closing the holder, wherein the holder clamps the longer free end of the portion of long fibres;
(g) opening the gripper for releasing the end of the bundle of long fibres clamped by the gripper;
(h) moving the gripper to the starting position.

### BRIEF DESCRIPTION OF DRAWINGS

Fig. 1 shows a side view of the system for transferring the separated bundle of long fibres, where the gripper is in partially closed position and another view of the gripper section from above in the same position.
Fig. 2 shows the top plate of the gripper.
Fig. 3 shows the bottom box of the gripper.
Fig. 4 shows the first position, wherein one end of the separated bundle of long fibres is placed in an opened gripper on the bottom box plate and the other free end of the bundle of long fibres is placed on the supporting means.
Fig. 5 shows the second position, wherein the bundle of longer free end of fibres is clamped by the clamping unit.
Fig. 6 shows the third partially closed position, wherein the top plate of the gripper is lowered to the bottom box and lightly compresses the introduced separated bundle of long fibres at the back part of the gripper.
Fig. 7 shows the fourth position, wherein the gripper is moved away from the clamping unit firmly clamped in the longer end of the separated bundle of long fibres.
Fig. 8 shows the fifth position, wherein the bottom box of the gripper closes completely.
Fig. 9 shows the sixth position where the clamping unit is opened and the longer end of separated bundle of long fibres is released.
Fig. 10 shows the seventh, wherein the gripper is transported to the next fibre processing point.
Fig. 11 shows the eighth position, wherein the gripper is placed on top of the two open holder plates.
Fig. 12 shows the ninth position, wherein the plates of the holder are closed and the bundle of long fibres under the gripper are clamped.

### DETAILED DESCRIPTION OF THE INVENTION

The gripper for the separated bundle of long fibres, the transferring system, and the method according to one embodiment of the present invention is described with reference to the drawings.

This invention is applicable in all bast fibres industry, particularly it is intended for long fibres (+ 20 cm) such as flax fibres, hemp fibres, sisal fibres, kenaf fibres, jute fibres, as well in scutched form as in hackled form. In the description of the patent, all these fibres are defined as 'long fibres'.

This gripper is mounted on a robot or another tool, which serves as the transport mechanism between one location and another location.

### List of references:

1 - a separated bundle of long fibre; 2 - supporting means; 3 - a clamping unit; 4 - a bottom box; 5 - a top plate; 6 - a holder for long fibres 1; 7 - a flexible flap; 8 - a motion unit of the gripper; 9 - a back edge of the top plate 5; 10 - a bottom plate; 11 - a back part of the bottom plate (10); 12 -side edges of the bottom plate (10); 13 - an inner side of the top plate (5); 14 - a front part of the top plate (5); 16 - a tube/rod; 17 - an inner side of the bottom plate (10); 18 - a front part of the bottom box (4); 19 - a motion unit of the clamping unit (3);

As an example, is presented the gripper for a separated bundle of long fibres (1) comprising the bottom box (4) of rigid material, and the top plate (5), which were commanded by the motion unit (8).

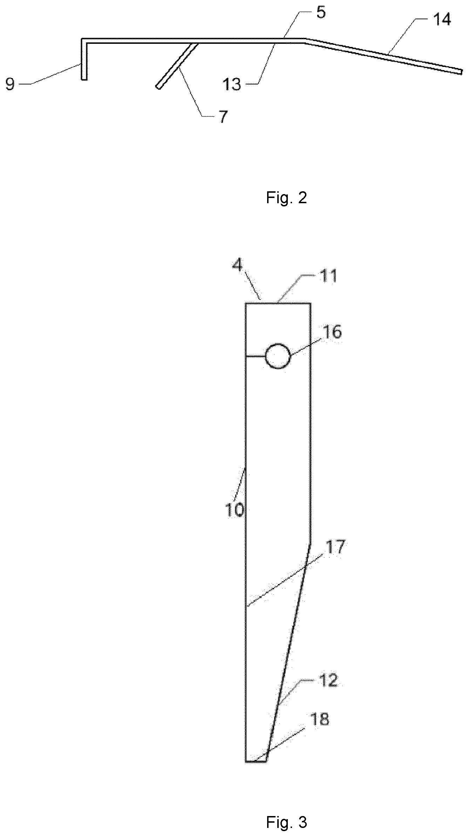

The bottom box (4) (Fig. 3) is composed of an elongated plate (10). At the back part (11) of the bottom box (4), there is a rotation tube/rod (16), placed between the raised side edges (12) of the bottom box (4). The purpose of this tube or rod is to provide strength and stability to the bottom box. Moreover, the axis of this tube/rod (16) is the axis of rotation of the bottom box (4), around which the bottom box (4) rotates from a vertical to a horizontal position during closing and opening. The plate (10) of bottom box (4) is in U-shaped form. There are two raised side edges (12) in the inner side (17) of the bottom box (4), which are from 0,1 to 20 cm high, specifically 3 cm high.

The top plate (5) (Fig. 2) which is in the open position at the start of the cycle can be closed by a parallel motion or by a lateral rotary motion to the bottom box (4).

The back edge (9) of the top plate (5) in the inner side (13) is raised through the whole width.

A thin flexible flap (7) is provided adjacent to the back edge (9) of the top plate (5), on the inner side (13) of the top plate (5) across the width of the top plate (5). The flexible flap (7) is made of rubber or another material with similar properties which creates a withholding pressure on the fibres (1) when the gripper is in a closed position.

The front part (14) of the top plate (5) slopes down to the inner side of the top plate (5) to facilitate access between the plates of the holder (6).

In a closed position of the gripper the two plates (5) and (10) hold the bundle of long fibres (1). The plate (10) of the bottom box (4) of the grippe, the side edges (12) and the top plate (5) are perforated with holes, on the one hand, to make the gripper lighter and, on the other hand, as ventilation holes to pass the air flow created by the top plate (5) and the bottom box (4) when closing.

The holder (6), the U-shaped form support means (2) and optionally the clamping unit (3) are used as additional components for the transferring of the separated bundle of long fibres (1). All these components together with the gripper form a fibre transfer system for separated bundle of long fibres (1).

An example of how this system operates is described below.

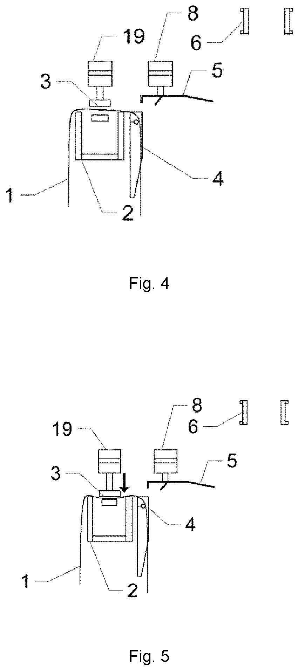

The gripper is positioned in an open position at the point where it receives the bundle of long fibres (1), wherein the back part (11) of the bottom box (4) plate (10) is adjacent to the support means (2). The gripper is in receiving position of the separated bundle of long fibres (1), when the bottom box (4) of the gripper is in vertical position (the back part (11) of the bottom box plate (10) in up position and the front part (18) of the bottom box (4) in down position) meanwhile the top plate (5) is in open position (Fig. 2 and 3). The separated bundle of long fibres (1) is placed in the open gripper and the support means (2) as seen in Fig. 4. One end of separated bundle of long fibres (1) is introduced over the back edge of the back part (11) of plate (10) of the bottom box (4) and the tube/rod (16) and is placed lengthwise between the two raised side edges (12) of the plate (10) of the bottom box (4). The other end of the separated bundle of long fibres (1) is placed on the support means (2). The separated bundle of long fibres (1) is introduced automatically (e.g., from an automatic feeding unit) or manually.

The next step is as shown in Fig. 5: the clamping unit (3) moves downwards by a motion unit (19) and clamps the bundle of long fibres (1) on the support means (2).

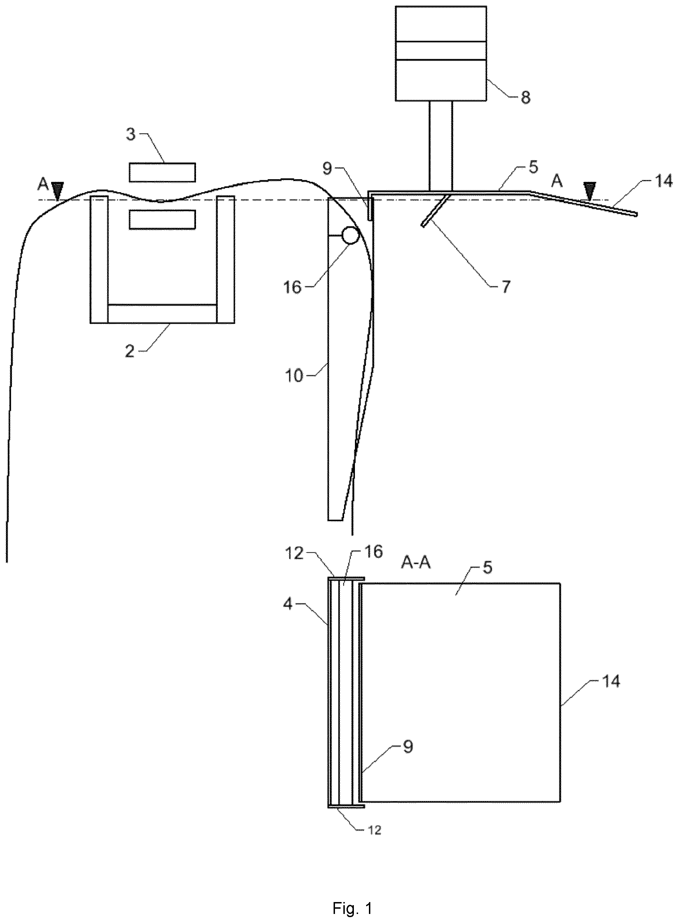

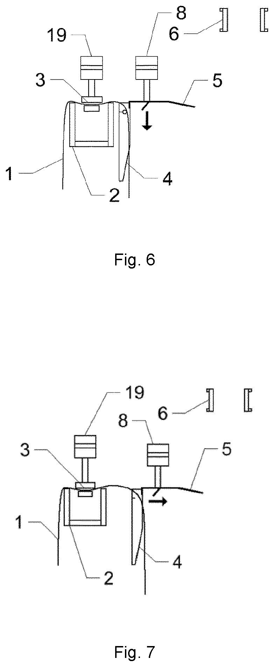

Subsequently, the top plate (5) is closed, and the bundle of long fibres (1) is clamped in place at the back part (11) of the plate (10) of the bottom box (4) by the top plate (5), as depicted in Fig. 1 and Fig. 6. However, it's important to note that the bundle of long fibres (1) is not yet fully clamped in the gripper, it is in partially closed position of the gripper.

Optionally, a pulling action can be performed by moving away the gripper from the clamping unit (3) as shown in Fig. 7. The gripper is pulled away from the support means (2), where one end of the bundle of long fibres (1) is firmly clamped in the clamping unit (3). This action creates tension on the fibres between the back part (11) of the bottom box plate (10) and the top plate (5), resulting in homogenization over the full width of the bundle of long fibres (1) during the pull through step.

The pull through action is from 0 up to 100 cm, specifically 15 cm. This action is optional and gives the advantage of homogenizing the layer of the bundle of long fibres (1) in the gripper and later in the holder (6). In this phase the gripping position on the length of the bundle of long fibres is also determined by reference to the holder (6).

In this step, the position of bundle of the long fibre (1) in relation to the holder (6) is changed according to the measured length of the bundle of the long fibres (1).

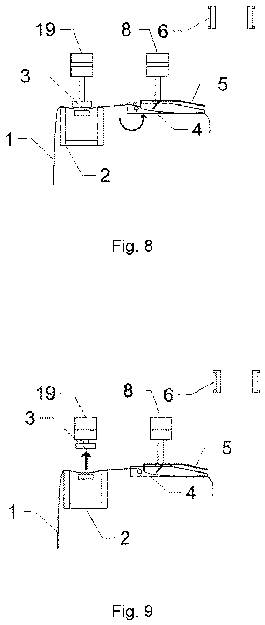

After the optional pulling action described in the previous step, the bottom box (4) with the remaining tail of the bundle of long fibres (1) is closing (movement from vertical to horizontal way) as depicted in Fig. 8. Simultaneously, the top plate (5) is inserting between the two raised side edges (12) of the bottom box (4). At this point, bundle of long fibres (1) in one end is completely gripped by the gripper. In the gripper closed position the flexible flap (7), the back edge (9) of the top plate (5) together with the tube/rod (1)3 of the bottom box (4) ensures a stable grip of the separated bundle of long fibres (1). The two raised side edges (12) of the bottom box (4) prevents the separated bundle of long fibres (1) from falling out of the gripper during transportation. This step prevents movement and tangling of the bundle of long fibres (1) during further handling.

Following this sequence, the clamping unit (3) releases the clamped longer free end of the bundle of long fibres (1), as depicted in Fig. 9. This action allows to start the transportation movement.

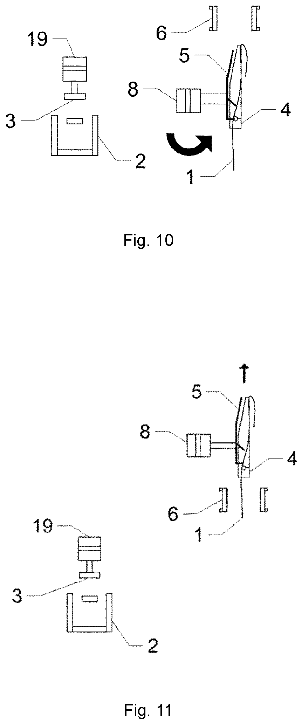

The closed bottom box (4) and the top plate (5) with the securely held separated bundle of long fibres (1) is transported by a robot or another tool from support means (2) to the holder (6) as shown in Fig. 10 into the position such that the free end of the bundle of long fibres (1) is positioned between the plates of the holder (6) (Fig. 11).

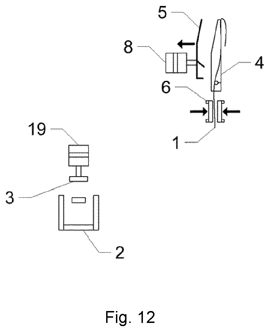

The plates of the holder (6) close and clamp the free end of the bundle of long fibres (1) under the gripper, the gripper opens and releases the bundle of long fibres (1) (Fig. 12). Now the gripper moves to the starting position and restarts the following cycle.

The whole cycle can also be performed in the same way but from different angles. E.g., the first step begins with the bottom plate (10) in horizontal position. The introduction of the bundle of long fibres (1) can also be done with holders (6) in another position.

The uniform thickness across the entire width of the bundle of long fibres (1) clamped in the gripper ensures a secure grip and prevents the fibres from slipping and tangling during subsequent handling.

Furthermore, the description of the present invention is provided for the purposes of illustration and description but should not be interpreted as being limited to the precise form disclosed. Various modifications and variations can be made by those skilled in the art without departing from the scope of the invention. The embodiment selected and described herein is for illustrative purposes and is best suited to explain the principles of the invention and its practical application, so that those skilled in the art may utilize the invention in various embodiments and with various modifications.

## Claims

**1.** A gripper for gripping and holding a bundle of long fibres, comprising:
a top plate (5) consisting of an inner side (13) and an outer side, a back edge (9) in the back part of the top plate (5), a front part (14) of the top plate (5); and the
bottom plate (10) with an inner side (17), the two longitudinal side edges (12), a front part (18) and a back part (11); a motion unit (8) with a connector between the top plate (5) and the bottom plate (10) with a means for producing a clamping force; wherein the inner side (13) of the top plate (5) faces the inner side (17) of the bottom plate (10) and wherein a back part (11) of the bottom plate (10) corresponds to the back edge (9) of the top plate (5); and
the bottom plate (10) which is pivotable around the pivot axis;
**characterized in that:**
the back edge (9) of the said top plate (5) is raised into the inner side (13) of the top plate (5), for even compression over the entire width of the layer of the bundle of long fibres (1) in partially closed or closed gripper position;
on the inner side (13) of the top plate (5) at a distance from the back edge (9) a flexible flap (7) is affixed across the width of the top plate (5) to create the compression for securely holding the bundle of long fibres (1) within the closed gripper;
the bottom plate (10) is an elongated plate with the side edges (12) raised into the inner side of the bottom plate (10), forming a U-shaped bottom box (4) with an extended lower part, for preventing the separated bundle of long fibres (1), placed lengthwise in the bottom box (4), from falling out on the sides;
the bottom box (4) is pivotable around an axis configurated widthwise of the bottom box (4), enabling it to be opened and closed.

**2.** The gripper according to claim 1, **characterized in that** the tube/rod (16) mounted between the raised side edges (12) of the bottom box (4) across the bottom plate (10) of the bottom box (4) at a distance from the back edge is configured to provide the strength and stability to the bottom box (4) in open and closed positions.

**3.** The gripper according to claims 1 or 2, **characterized in that** the axis of the tube/rod (16) is the axis of rotation of the bottom box (4).

**4.** The gripper according to any of claims 1-3, **characterized in that** two raised side edges (12) of the bottom box (4) are from 0,1 to 20 cm high, specifically 3 cm.

**5.** The gripper according to any of claims 1-4 **characterized in that** the top plate (5) from open position can be closed in parallel movement or in pivoting movement from the side against the bottom box (4).

**6.** The gripper according to any of claims 1-5, **characterized in that** the length of the bottom plate (10) of the bottom box (4) depends on the length of the fibres and is not greater than half of the total length of the bundle of long fibres (1).

**7.** The gripper according to any of claims 1-6, **characterized in that** the bottom box (4) plate (10), the side edges (12) and the top plate (5) are equipped with perforations or holes, to reduce the overall weight of the gripper and to provide ventilation by allowing to pass an air flow created by the movement of the top plate (5) and the bottom box (4) during closing to pass through.

**8.** The gripper according to any of claims 1-7, **characterized in that** the longitudinal side edges of the top plate (5) fit in between the raised side edges (12) of the bottom box (4).

**9.** A system for transferring of the separated bundle of long fibres (1), comprising:
the gripper as disclosed in claims 1-8, mounted on a robot or another tool, which serves as a transport;
a support means (2) for supporting the longer free end of the placed separated bundle of long fibres (1);
a holding means (6) for taking over the longer free end of the transferred bundle of long fibres (1).

**10.** The system for transferring of a separated bundle of long fibres (1) according to claim 9, **characterized in that** it additionally comprises a clamping unit (3) for compressing and holding the longer free end of the separated bundle of fibres (1) placed on the support means (2).

**11.** A method for the transferring of the separated bundle of long fibres using the system of transferring the separated bundle of long fibres according to claim 9, comprising the following method steps:
(a) bringing the gripper to the collection point of the separated bundle of long fibres (1) in an open position;
(b) introducing the separated bundle of long fibres (1) into the gripper, where one end of the separated bundle of the long fibres (1) is placed lengthways between the two raised side edges (12) of the bottom box (4) and the other free end of the separated bundle of long fibres (1) coming out the back edge of the bottom plate (10) and laying on the support means (2);
(c) closing the whole gripper, wherein the top plate (5) is inserting between the two raised edges (12) of the bottom box (4) and the bundle of long fibres (1) is completely gripped in the gripper with the compressed retention points;
(d) moving the closed gripper with the clamped bundle of long fibres (1) to the holder (6);
(e) inserting the longer free end of the bundle of long fibres into the holder (6);
(f) closing the holder (6) wherein the holder (6) clamps the longer free end of the portion of long fibres (1);
(g) opening the gripper for releasing the end of the bundle of long fibres clamped by the gripper;
(h) moving the gripper to the starting position.

**11.** The method for the transferring of the separated bundle of long fibres according to claim 10, wherein an additional clamping step is performed between steps (b) and (c), wherein the longer free end of the bundle of long fibres is clamped with the clamping unit (3) so that during the pull through transaction a homogenization is created across the entire width of the bundle of long fibres (1).
